# EUROPEAN PATENT SPECIFICATION

(11) **EP 3 951 543 B1**
(45) Date of publication and mention of the grant of the patent: **25.12.2024**
(21) Application number: 20780024.4
(22) Date of filing: 10.03.2020
(51) Int. Cl.: A47L 11/24, A47L 11/40, B60L 53/37, B60L 53/30, B60L 3/00, H02J 7/00, B60L 53/35, A47L 9/30, A47L 9/28, G05D 1/247, G05D 1/661, G05D 105/10, G05D 109/10, G05D 111/10

(54) **MOBILE DEVICE RECHARGING METHOD AND MOBILE DEVICE**
VERFAHREN UND MOBILE VORRICHTUNG ZUM WIEDERAUFLADEN EINER MOBILEN VORRICHTUNG
PROCÉDÉ DE RECHARCHE DE DISPOSITIF MOBILE ET DISPOSITIF MOBILE

(30) Priority: 26.03.2019 CN 201910230935
(43) Date of publication of application: 09.02.2022
(73) Proprietor: Qfeeltech (Beijing) Co., Ltd., Beijing 100191 (CN)
(72) Inventor: ZHAO, Lei, Beijing 100191 (CN); XU, Sichen, Beijing 100191 (CN); ZHANG, Yiming, Beijing 100191 (CN); CHEN, Zhen, Beijing 100191 (CN)
(74) Representative: Vigand, Philippe
(86) International application number: PCT/CN2020/078539
(87) International publication number: WO 2020/192407

(56) References cited:
- EP-A1- 3 505 037
- WO-A1-2018/038488
- CN-A- 104 055 462
- CN-A- 106 308 685
- CN-A- 106 451 635
- CN-A- 106 468 920
- CN-A- 106 814 739
- CN-A- 107 124 014
- CN-A- 107 910 915
- CN-A- 108 303 984
- CN-A- 108 303 984
- CN-A- 108 733 048
- CN-A- 108 988 403
- CN-A- 108 988 403
- CN-A- 109 508 014
- US-A1- 2012 049 798
- US-A1- 2018 052 468
- US-A1- 2018 246 518
- US-A1- 2018 249 872

## Description

### TECHNICAL FIELD

The present invention relates to the field of mobile devices and, more specifically, to a mobile device recharging method and a mobile device.

### BACKGROUND TECHNOLOGY

Automatic recharging technologies have been widely implemented in various mobile devices. During the process of automatic recharging for a mobile device, first, a charging base continuously transmits a recharging guidance signal, then a receiver of the mobile device receives the recharging guidance signal and moves to the charging base to perform charging under the guidance of the recharging guidance signal. But in practical implementation, because the mobile device oftentimes cannot find the charging base, it often causes recharging failure.

Currently, there are three primary reasons for the mobile device recharging failure:
1. The plug of the charging base has not been pulled off, i.e., the charging base is still electrically active. But due to reasons such as localization error, correction of coordinate locations or being knocked by an external object, there may be a deviation between the location of the charging base stored in the mobile device and the actual location of the charging base.
2. The plug of the charging base has been pulled off, and the charging base has been manually changed to another power supplying location and been re-supplied with electrical power.
3. The plug of the charging base has been pulled off, and the charging base has been arbitrarily placed to another location without being supplied with the electrical power.

Document US 2018/ 246518 discloses a recharging method for a mobile device reflecting the preamble of present claim 1. Other recharging methods for mobile devices are disclosed in documents CN106308685A, US2012/049798A1, US2018/052468A1 and US2018/249872A1.

### CONTENT OF THE INVENTION

To resolve the issues existing in relevant technologies to at least a certain extent, the present invention provides a mobile device recharging method and a mobile device, such that a mobile device recharging success rate can be increased.

According to a first aspect of the embodiments of the present invention, a mobile device recharging method is provided according to claim 1. Preferred embodiments are provided in the dependent claims.

According to a second aspect of the present invention, a mobile device is provided according to claim 7.

The technical solutions provided by the embodiments of the present invention have the following advantageous effects:

During the recharging process of the mobile device, because a regional search for the charging base is added, even if there is a deviation or displacement in the location of the charging base, the mobile device is still able to automatically search for and discover the charging base at a high probability, and the mobile device recharging success rate is increased.

It should be appreciated, that the above general descriptions and the detailed descriptions in the following texts are merely illustrative and explanatory, and do not limit the scope of the present invention.

### DESCRIPTION OF THE DRAWINGS

The accompanying drawings are incorporated into the specification as parts of the specification, and show embodiments consistent with the present invention, and are used to explain the principle of the present invention together with the specification.
FIG. 1a is a flowchart illustrating a mobile device recharging method, according to an embodiment of the present invention;
FIG. 1b is a flowchart illustrating a mobile device recharging method, according to an embodiment of the present invention;
FIG. 1c is a flowchart illustrating a mobile device recharging method, according to an embodiment of the present invention;
FIG. Id is a flowchart illustrating a regional search of the recharging method, according to an embodiment of the present invention;
FIG. 2a is a schematic illustration of a charging base and a recharging guidance signal, according to an embodiment of the present invention;
FIG. 2b is a schematic illustration of a charging base and a recharging guidance signal, according to an embodiment of the present invention;
FIG. 3a is a schematic illustration of a regional search, according to an embodiment of the present invention;
FIG. 3b is a schematic illustration of a regional search, according to an embodiment of the present invention;
FIG. 3c is a schematic illustration of a motion of the mobile device, according to an embodiment of the present invention;
FIG. 3d is a schematic illustration of a motion of the mobile device, according to an embodiment of the present invention;
FIG. 3e is a schematic illustration of a motion of the mobile device, according to an embodiment of the present invention;
FIG. 3f is a schematic illustration of a regional search, according to an embodiment of the present invention;
FIG. 3g is a schematic illustration of a regional search, according to an embodiment of the present invention;
FIG. 3h is a schematic illustration of a regional search, according to an embodiment of the present invention;
FIG. 4a is a schematic illustration of a search zone, according to an embodiment of the present invention;
FIG. 4b is a schematic illustration of a search zone, according to an embodiment of the present invention.

### DETAILED IMPLEMENTATIONS

Here, the exemplary embodiments will be described in detail. The exemplary embodiments are shown in the accompanying drawings. When the following descriptions involve drawings, unless otherwise indicated, the same numerals in different drawings represent the same or similar elements. The implementations described in the following exemplary embodiments do not represent all implementations consistent with the present invention. Conversely, they are merely example devices and methods that are consistent with some aspects of the present invention described in detail in the accompanying claims.

It should be noted that, the term "recharging" in the present invention refers to the mobile device returning to the charging base to perform charging. The mobile device recharging method provided by the present invention is suitable for mobile devices.

The mobile device refers to a smart mobile apparatus configured to execute predetermined tasks within a predetermined zone, including but not limited to: a robot vacuum cleaner ("RVC"), such as a smart floor sweeping device, a smart floor mopping device, a window cleaning robot, etc.; a logistics robot, a moving robot, etc.; a lawn mowing robot, a de-icing robot, etc.; a companion type mobile robot, such as: a smart electronic pet, a nanny robot; a service type mobile robot, such as: a reception robot for hotels, inns, meeting places; an industrial inspection smart device, such as a power line inspection robot, a smart forklift, etc.; a security robot, such as: a home use or commercial use smart guard robot, etc.

In one embodiment of the present invention, a mobile device recharging method is provided according to claim 1.

It should be noted that, in some embodiments, the target location may be referring to a precise location, such as being represented by (x0, y0) using two-dimensional coordinates as an example. Alternatively, in some embodiments, the target location may be a location in generalized meaning, i.e., a location within a predetermined error range. For example, if the target location is expressed as (x0 ± 5x, y0 ± 5y), where 5x, 5y represent errors, locations near the target location may also be categorized as the target location in the present invention. Specifically, the target location may also include locations within a reasonable zone of the stored location of the charging base, for example, within a circular zone having a radius of 20 cm near the candidate location (within this nearby zone, for the mobile device carrying a camera and/or a proximity sensor, the location of the charging base may be determined through the camera and/or the proximity sensor, therefore, the locations within the nearly zone are also categorized as the candidate location). The signal sensing location may also include locations within the reasonable zone near the location where the recharging guidance signal can be detected, for example, within a zone with a 5 cm radius near the signal sensing location (because the sensitivity of a recharging guidance signal receiver differs with different models, some are sensitive, the detectable range is large, some are less sensitive, the detectable range is relatively small. A technical person in this field can appreciate that the protection scope of the present invention should not be limited by the characters of the receiver itself).

It should be noted that the candidate location can be an initial location of the charging base when the mobile device is started at the charging base, or can be a location of the charging base encountered and stored by the mobile device when executing predetermined tasks.

The signal sensing location is a location where the recharging guidance signal can be detected, specifically, the signal sensing location can be a location where the mobile device detected the recharging guidance signal during movement, or can be a location stored by another device where the recharging guidance signal was detected, and the signal sensing location information was transferred to the mobile device through a mobile storage device, a wireless network, a cloud server, etc.

Because the charging base may be displaced during the operation of the mobile device, the mobile device may encounter the charging base or detect the recharging guidance signal at multiple locations during its operation. Therefore, even in the situation where there is only one charging base, multiple target locations may be stored. In the situation where there are multiple charging bases, the target locations may include multiple stored candidate locations and/or multiple stored signal sensing locations. Because the mobile device does not have knowledge of the actual current location of the charging base, the mobile device can only attempt to search for the charging base from the target locations previously stored in its "memory."

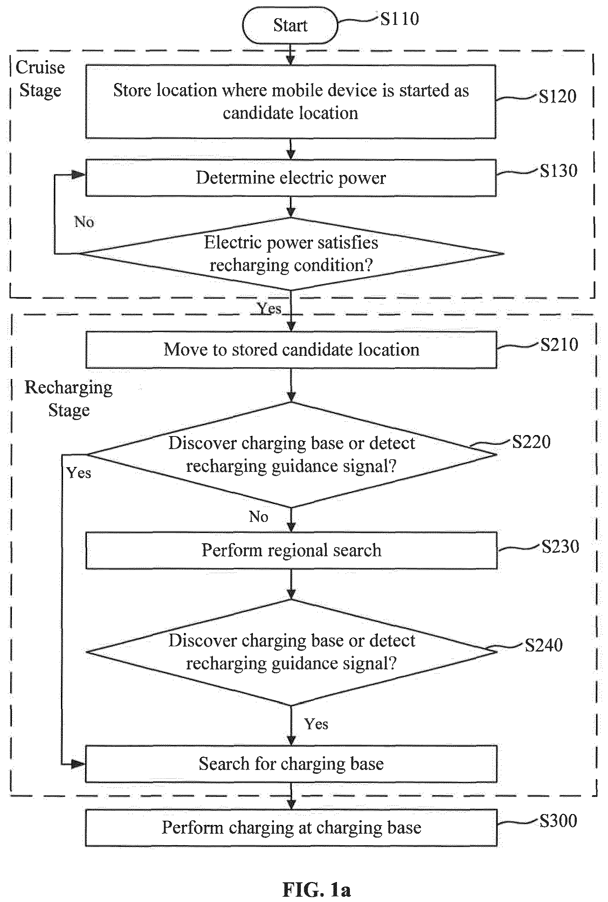

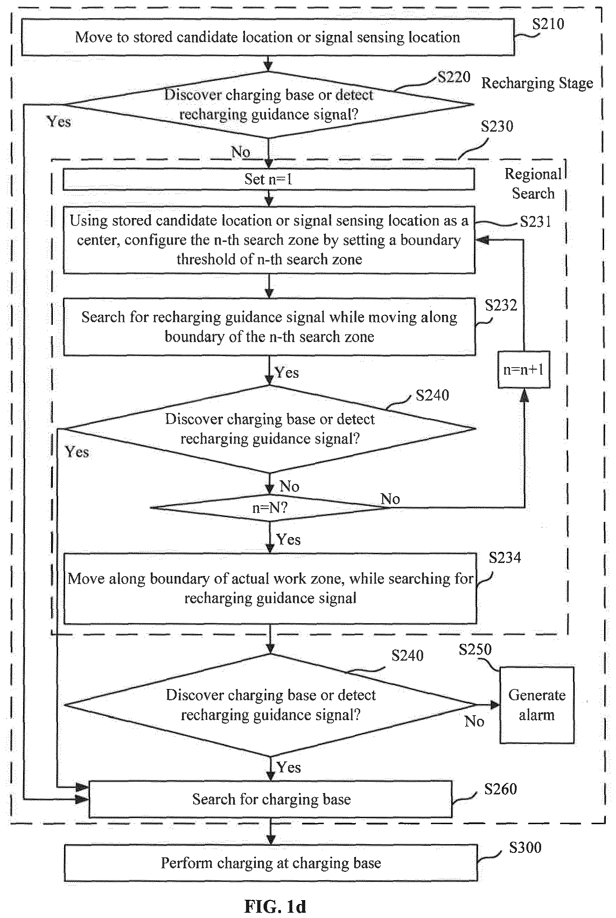

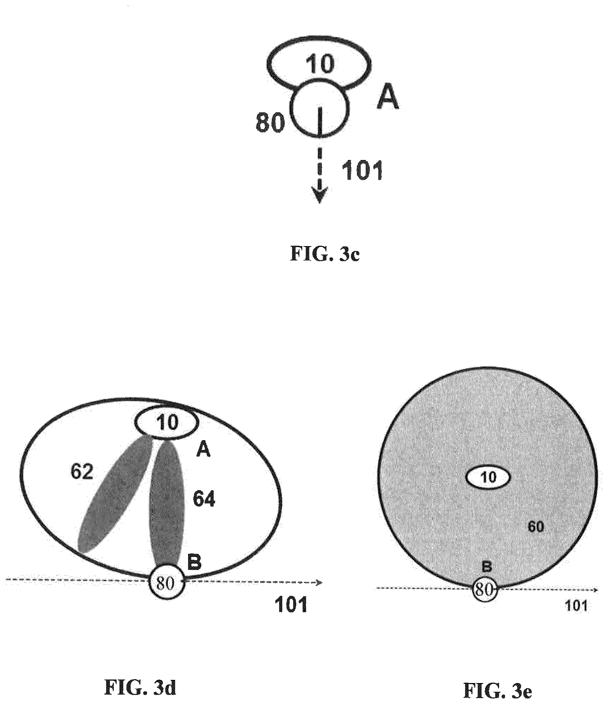

FIGs. 1a-1d are mobile device recharging methods illustrated based on exemplary embodiments. The various embodiments of the present invention are described as follows with reference to FIGs. 1a-1d, 3c-3e.

Embodiment 1: FIG. 1a is a flowchart according to an embodiment when the mobile device shown in FIG. 3c is started at a charging base. The mobile device recharging method according to this embodiment may include:

Step S110: the mobile device 80 is started at a charging base 10.

Step S120: the mobile device stores the location when it is started as a candidate location; then, the mobile device 80 departs from the charging base 10 to execute a predetermined task.

The predetermined task refers to the primary function and the auxiliary function the mobile device is configured to execute. For example, for a cleaning robot, its predetermined task includes cleaning a room, playing audio, etc.; for a logistics robot, its predetermined task includes moving cargos according to a plan or schedule; for a service type robot, its predetermined task includes performing relevant services, etc. The same applies to the following similar descriptions.

Step S130: the mobile device determines whether an electric power satisfies a recharging condition.

The recharging condition may have various forms, such as the electric power being lower than a certain electric power value or a lower limit of a predetermined electric power percentage threshold, or the running time or running mileage has reached a certain threshold value or a certain percentage, or other parameters that can quantify the remaining electric power and/or a relationship between the remaining electric power and remaining mileage or time. The same applies to the following similar descriptions. In the present embodiment, the mobile device satisfying the recharging condition is regarded as a mobile device to be charged. In other embodiments, the mobile device to be charged may also be one with recharging as a current task to be executed.

In step S130 the electric power may be determined based on a certain time interval, the electric power may be determined in real time, or the electric power may be determined when a predetermined condition is satisfied (e.g., the electric power may be determined after detecting that the candidate location has been stored and/or the signal sensing location has been stored). A technical person in this field should appreciate that the present invention is not limited by the timing and manner of determining the electric power, and the order, timing, triggering condition, and number of times relating to execution of this step and various functions of the mobile device, and/or other steps or any combination thereof. The same for the following.

A technical person in this field should appreciate that the execution order for step S120 and step S130 can have various forms. It can be first executing step S120 and then executing step S130, or first executing step S130, and then executing step S120, or simultaneously executing steps S120 and S130. In fact, a technical person in this field can easily understand that the step S130 of "determining electric power" is independent of mobile device executing its primary functions or auxiliary functions, and is also independent of other functions such as mobile device storing candidate location information, detecting recharging guidance signals, storing signal sensing locations. The present invention does not limit the order in which the "determining electric power" step is executed. As such, the present invention is not limited by the order in which the step S130 of "determining electric power" and other steps are performed. The same applies to the following similar descriptions

Each step after step S 110 may be performed at the same time as performing a normal predetermined task, and therefore can be categorized as a "cruise stage," as shown by the dashed box for the "cruise stage" in FIG. 1a.

Step S210: if the electric power of the mobile device satisfies the recharging condition, the mobile device to be charged moves (also referred to as navigates) to a candidate location it stores or a nearby location thereof.

Step S220: when the mobile device arrives at the candidate location or its nearby location, and/or on the movement path, searching for the recharging guidance signal transmitted by the charging base and/or searching for the charging base. If the charging base is discovered (for example, by methods such as directly detecting the charging base through a proximity sensor or a camera, or receiving a short-distance recharging signal by a signal receiver), the mobile device may directly move to the charging base to perform charging; or if the recharging guidance signal is detected, the mobile device may find the charging base under the guidance of the recharging guidance signal to perform charging. Otherwise, the mobile device may execute step S230.

Step S230: if the charging base is not discovered and/or the recharging guidance signal transmitted by the charging base is not detected at the candidate location or its nearby location, the mobile device performs a regional search to search for the recharging guidance signal and/or the charging base.

Step S240: if the charging base is discovered during the regional search, the mobile device directly moves to the charging base; or if the recharging guidance signal is detected, the mobile device moves to the charging base under the guidance of the recharging guidance signal.

Step S300: the mobile device performs charging at the charging base.

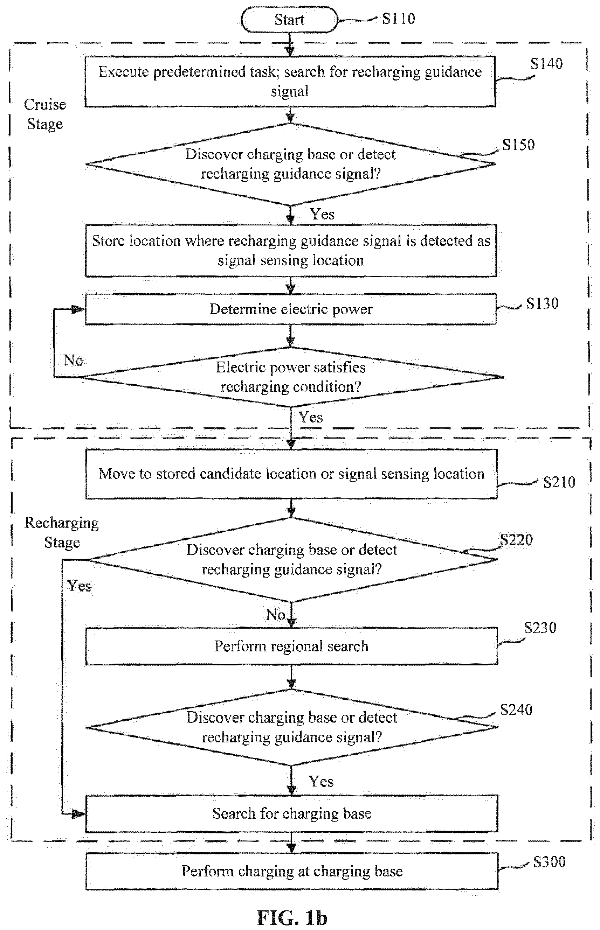

Embodiment 2: if the initial location where the mobile device is started is not at the charging base, the flowchart of this embodiment is shown in FIG. 1b. In this embodiment, the mobile device may be started at any location other than the charging base. The mobile device recharging method may include:
Step S 110: the mobile device is started at any location other than the charging base.
Step S 140: the mobile device 80 executes a predetermined task, and searches for the recharging guidance signal transmitted by the charging base 10.

The search for the recharging guidance signal by the mobile device may be executed during the entire process of performing the predetermined task or during a predetermined time period, or may be executed sequentially with the predetermined task. For example, the execution of the predetermined task at a first time t1, and the execution of the search for the recharging guidance signal at a second time period t2 may be performed sequentially according to a predetermined order.

A technical person in this field can easily appreciate, that the step of searching for the recharging guidance signal by the mobile device is independent of the mobile device executing its primary functions and auxiliary functions, and is also independent of steps for storing candidate location information, storing signal sensing location, determining electric power, etc. The present invention does not limit the order, timing, triggering condition, and number of times of executing the step of searching for the recharging guidance signal. Thus the present invention is not limited by the order, timing, triggering condition, and number of times relating to the mobile device executing the step of searching for the recharging guidance signal and the mobile device executing various functions and/or other steps or any combination thereof. This explanation applies to all steps of this invention that include "searching for the recharging guidance signal," unless there is a logic conflict.

Step S 150: if the mobile device 80 detects the recharging guidance signal transmitted by the charging base, it stores the location where the recharging guidance signal is detected as the signal sensing location. As shown in FIG. 3d and FIG. 3e, when the mobile device moves in a direction 101, it detects the recharging guidance signal 62 and/or 64 shown in FIG. 3d at the location B, or detects the recharging guidance signal 60 shown in FIG. 3e, the mobile device stores the location B shown in FIG. 3d or FIG. 3e as the signal sensing location.

Step S 130: the mobile device determines whether the electric power satisfies a recharging condition. In this embodiment, the mobile device that satisfies the recharging condition may be regarded as a mobile device to be charged. In addition, a mobile device whose current primary task to be executed is recharging may be regarded as a mobile device to be charged. Descriptions of the steps for determining the electric power, satisfying the recharging condition are the same as above descriptions, which are not repeated.

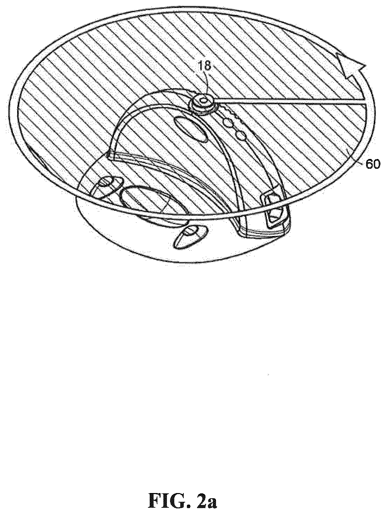

Each step after the step S 110 may be executed at the same time as the normal execution of the predetermined task, and therefore can be categorized as the "cruise stage," as shown by the dashed box for the "cruise stage" in FIG. 2a.

Step S210: if the electric power of the mobile device satisfies the recharging condition, the mobile device to be charged moves (also referred to as navigates) to the stored signal sensing location or its nearby location.

Step S220: the mobile device searches for the recharging guidance signal transmitted by the charging base and/or searches for the charging base when the mobile device arrives at the signal sensing location or its nearby location, or on the movement path. If the charging base is discovered (e.g., using methods such as directly detecting the charging base through a proximity sensor or a camera, or receiving a short-distance recharging signal by a signal receiver, etc.), the mobile device may move directly to the charging base to perform charging; if the recharging guidance signal is detected, the mobile device may find the charging base under the guidance of the recharging guidance signal to perform charging. Otherwise, the mobile device may execute step S230.

Step S230: if the charging base is not discovered or the recharging guidance signal transmitted by the charging base is not detected at the signal sensing location or its nearby location, the mobile device performs a regional search to search for the recharging guidance signal and/or the charging base.

Step S240: if the charging base is discovered during the process of the regional search, the mobile device may directly move to the charging base; if the recharging guidance signal is detected, the mobile device may move to the charging base under the guidance of the recharging guidance signal.

Step S300: the mobile device performs charging at the charging base.

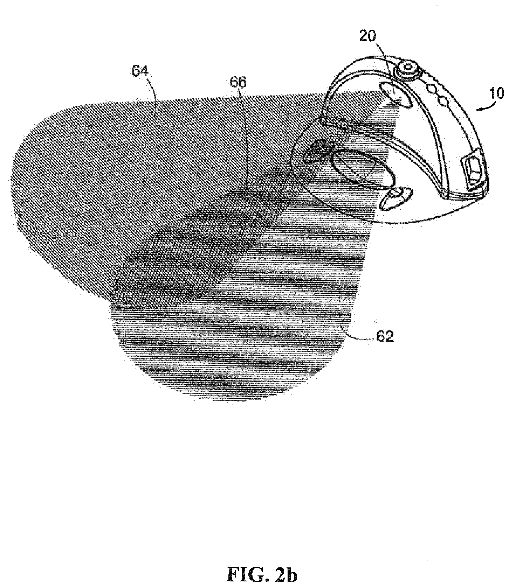

It should be noted that, the candidate location of the charging base is a location where the charging base may be located; a signal coverage zone of the charging base refers to a zone in which the recharging guidance signal of the charging base may be detected by the mobile device. Because the recharging guidance signal of the charging base typically covers the location of the charging base, the signal coverage zone of the charging base typically covers the candidate location. The shape of the signal coverage zone may be a circle, an oval or any other suitable shapes that may be formed by the coverage zone of the recharging guidance signal. For example, in the embodiment shown in FIG. 2b, the recharging guidance signals 62 and 64 transmitted by a transmitter 20 of the charging base 10 are directional signals, the signal coverage zones of which are oval as shown in FIG. 3d. If the electric power of the mobile device 80 is sufficient when executing the predetermined task, at this moment there is no urgent need for charging, this stage can be called a "cruise stage." Therefore, as long as the mobile device is at any location within its signal coverage zone, the mobile device may detect the recharging guidance signal 62 or 64, knowing that the charging base is within a relatively small area around this location, without having to specifically know the actual precise location of the charging base. Therefore, at this moment, the current location of the mobile device where the mobile device detects the recharging guidance signal is stored as the signal sensing location. According to the above definition of the "signal coverage zone," the "signal sensing location" is located within the "signal coverage zone," and any location where the recharging guidance signal is not detectable is not within the signal coverage zone, i.e., is not the "signal sensing location." Accordingly, the "signal coverage zone" may be regarded as a set formed by "signal sensing locations."

The mobile device typically monitors, in real time, the remaining electric power. When the electric power is relatively low, e.g., when the electric power is lower than a predetermined low electric power threshold of 10%, the mobile device may need to be recharged immediately. This stage may be referred to as the "recharging stage." The mobile device needs to immediately move to a signal sensing location it stored at the "cruise stage," i.e., move to be within the stored signal coverage zone. If the recharging guidance signal 62 or 64 is detected again at the signal sensing location, it finds the charging base under the recharging guidance signal to perform charging.

If the recharging guidance signal is an omnidirectional signal 60, as shown in FIG. 2a, at this moment the signal coverage zone of the recharging guidance signal is the circular shaded zone shown in FIG. 3e. Because the omnidirectional signal does not have directionality, the mobile device may move to a certain location within the signal coverage zone, even if it detects the recharging guidance signal, it is possible that it still cannot determine the specific direction of the charging base. Therefore, it may be necessary for the mobile device to compare, during the motion process (or referred to as the movement process or navigation process), the strengths of the recharging guidance signals detected at two consecutive time instances to determine whether the mobile device is moving toward or away from the charging base, thereby determining whether it is moving closer to the charging base to ensure that it can successfully perform charging.

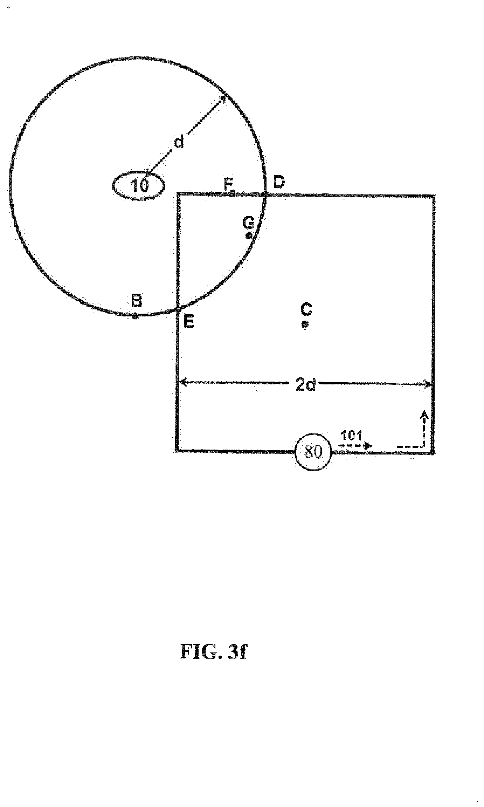

One embodiment is explained and described. As shown in FIG. 3f, after the mobile device searches and detects the recharging guidance signal at a first time instance t1 (e.g., at location D), the strength of the recharging guidance signal at the first time instance t1 is recorded as SI1. During subsequent movements, for example, when moving to a location F at a second time instance t2, the strength of the recharging guidance signal at this location is recorded as SI2. Because the location F is relatively closer to the charging base 10 than the location D, the strength SI2 of the recharging guidance signal is stronger than SI1. Thus, the mobile device 80 uses the location F as the new signal sensing location to replace the signal sensing location D stored at the first time instance 11. If during subsequent movements, for example, when the mobile device 80 moves to a location G at a third time instance t3, the strength of the recharging guidance signal at this location is recorded as SI3. Because the location G is relatively farther away from the charging base 10 than the location F, the strength SI3 of the recharging guidance signal is weaker than SI2. Thus, the mobile device does not store the location G at time instance t3, instead, still uses the location F as the signal sensing location. As can be seen, not every signal sensing location is stored, for example, the location G is not stored. According to the above described method, the mobile device gradually moves closer to the charging base 10, thereby accomplishing recharging successfully.

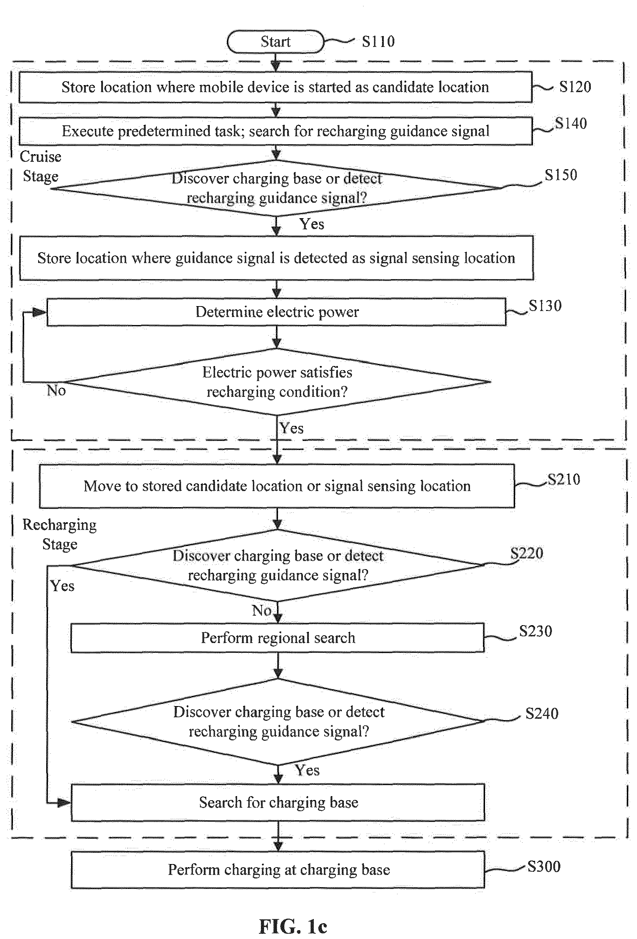

Embodiment 3: in fact, the above-described embodiment 1 and embodiment 2 can be combined, as a preferred embodiment. Its flowchart is shown in FIG. 1c. The mobile device recharging method of this embodiment includes:
Step S 110: the mobile device 80 is started at the charging base 10, as shown in FIG. 3c.
Step S120, the mobile device 80 stores the location when started (e.g., the location A shown in FIG. 3c) as the candidate location.
Step S140: the mobile device executes a predetermined task, and searches for the recharging guidance signal transmitted by the charging base.
Step S150: if the mobile device detects the recharging guidance signal transmitted by the charging base, the location where the recharging guidance signal is detected is stored as the signal sensing location, for example, the location B shown in FIG. 3d or FIG. 3e.

Because the mobile device is started at the location of the charging base, in a typical situation, it can detect the recharging guidance signal. Optionally, multiple signal sensing locations can be stored, or the location where the recharging guidance signal is last detected or the location where the greatest strength is detected is used as the only signal sensing location.

Step S130: the mobile device determines whether the electric power satisfies a predetermined recharging condition. In this embodiment, the mobile device satisfying the recharging condition may be regarded as the mobile device to be charged. Also, the mobile device with recharging being the primary task to be currently executed may be regarded as the mobile device to be charged. Descriptions relating to determining the electric power and satisfying the recharging condition are the same as above descriptions, which are not repeated.

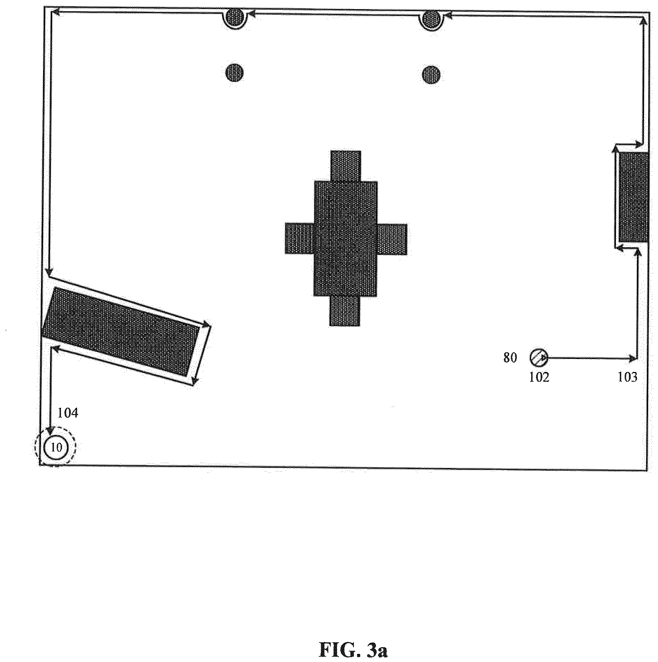

Each step after the step S 110 may be executed at the same time with the normal execution of the predetermined task, and thus, may be categorized as the "cruise stage," as indicated by the dashed box for the "cruise stage" in FIG. 3a.

Step S210: if the electric power of the mobile device satisfies the recharging condition, the mobile device to be charged moves (or referred to as navigates) to its stored candidate location and/or signal sensing location and/or its nearby location (collectively referred to as the target location. The target location includes: the candidate location, and/or the signal sensing location, and may also include the corresponding nearby location of the candidate location and/or the signal sensing location).

Step S220: when the mobile device 100 arrives at the target location, and/or during its moving process, the mobile device searches for the recharging guidance signal transmitted by the charging base and/or searching for the charging base (collectively referred to as the target. The target includes: the charging base and/or the recharging guidance signal transmitted by the charging base). If the charging base is discovered (e.g., through methods such as directly detecting the charging base via a proximity sensor or a camera, or receiving a short-distance recharging signal by a signal receiver, etc.), the mobile device may move directly to the charging base to perform charging; if the recharging guidance signal is detected, the mobile device may find the charging base under the guidance of the recharging guidance signal to perform charging. Otherwise, the mobile device may execute step S230.

Step S230: if the target is not detected at the target location, the mobile device performs a regional search to search for the target.

Step S240: if the charging base is discovered during the regional search, the mobile device moves directly to the charging base; if the recharging guidance signal is detected, the mobile device moves to the charging base under the guidance of the recharging guidance signal.

Step S300: the mobile device performs charging at the charging base.

Comparing the embodiment 1, embodiment 2, and embodiment 3, it can be seen that steps with the same numbering have substantially the same contents. The differences lie in that whether the stored location is the candidate location or the signal sensing location. They may be collectively referred to as the "target location." That is, the "target location" is the candidate location stored when the mobile device is started at the charging base or the candidate location of the charging base encountered and stored during the operation. The signal sensing location where the recharging guidance signal is detected during the operation of the mobile device is also the "target location." Therefore, the numbering of each corresponding step in the above three embodiments can be unified. Accordingly, the present invention does not differentiate the step numbering in these three embodiments, because the basic principle is the same.

Of course, in addition to the autonomously sensing the recharging guidance signal by the mobile device, the coordinates of the charging base may be actively input through a human or other device and stored as the candidate location, such as through the device 10 carried by the mobile device, for example functional buttons or a touch screen. A user or other device manually inputs the current location information of the charging base into the mobile device. After the mobile device receives the location information, it stores the location information as the candidate location of the charging base. For example, the user inputs into the mobile device the coordinate location of the charging base in the mobile device coordinate system, or the user divides zones on a map and selects a location of the charging base, the map being displayed on a 10 device of the mobile device or the 10 device of the charging base. Alternatively, the user divides zones on a map and selects the location of the charging base, the map being displayed on a smart terminal (such as a PC, a tablet computer or a cell phone, etc.) connected with the mobile device. All these can be stored as the candidate location of the charging base.

In some embodiments, the recharging guidance signal may be the omnidirectional signal 60 transmitted by a signal transmitter 18 of the charging base 10, as shown in FIG. 2a, FIG. 3e; or may be the directional signals 62, 64 transmitted by the signal transmitter 20 of the charging base 10, as shown in FIG. 2b, FIG. 3d. The recharging guidance signal may be at least one, or may be more, such as the two recharging guidance signals 62 and 64 as illustrated in FIG. 2b, where the two have an overlapping coverage zone 66. In some embodiments, the overlapping coverage zone 66 may be referred to as a third recharging guidance signal. Further, the mobile device recharging technical solutions of the present invention may be used in combination with other conditions to make the charging of the mobile device more reasonable. For example, the omnidirectional signal 60 and the directional signals 62 and 64 may be configured in the charging base 10. In the meantime, at least two levels of electric power thresholds, including a high electric power threshold and a low electric power threshold, may be set. When the electric power of the mobile device is higher than the high electric power threshold, the mobile device is configured to store, as a signal sensing location of the charging base, a current location of the mobile device when the mobile device discovers the recharging guidance signal 60, 62, or 64 in the process of executing a predetermined task (i.e., the "cruise stage"). When the electric power of the mobile device is lower than the high electric power threshold but higher than the low electric power threshold, the mobile device is configured to search for the recharging guidance signal while executing the predetermined task. If the recharging guidance signal is detected, the mobile device moves to the charging base under the guidance of the recharging guidance signal to perform the charging (i.e., the mobile device not only performs the predetermined task, but also performs charging when detecting the recharging guidance signal, belonging to an overlap stage between the "cruise stage" and the "recharging stage"). When the electric power of the mobile device is lower than the low electric power threshold, the mobile device is configured to terminate the execution of the predetermined task, and to fully commit to searching for the recharging guidance signal 60, 62, or 64, to perform charging as soon as possible (i.e., the "recharging stage"). This embodiment still includes the "cruise stage" and the "recharging stage." Of course, the above embodiments are only used to explain and describe the technical solutions of the present invention. In fact, the embodiments can be any other form. For example, as a simple form, the charging base transmits a single omnidirectional signal or directional signal to guide the mobile device to return to the charging base to perform the charging. In fact, on the mobile device carrying a camera or a laser-based distance measuring device, a rough or precise location of the charging base may be determined through simultaneous location and mapping ("SLAM") methods based on images captured by the camera, or through the laser-based distance measuring device, thereby locating the candidate location of the charging base or the signal coverage zone.

The candidate location of the charging base stored in the mobile device may be only one. But in specific practice, the actual location of the charging base may be changed to be different from the candidate location, or even not within the signal coverage zone. For example, a relatively large change in the location of the charging base may be caused by moving or accidental knocking by a person. As another example, other devices of the user need to be charged. The generic plug of the charging base of the mobile device is unplugged, and moved to another place to be re-supplied with power. When the actual location of the charging base is different from the candidate location, and is not within the signal coverage zone, because in the conventional technology the candidate location stored by the mobile device is not changed, this often causes charging failure to the mobile device, and the charging failure rate is high.

Furthermore, because positioning errors exit in the mobile device itself, for example, due to the accumulative errors of the encoder wheel and/or the inertial measurement unit ("IMU") of the mobile device, even if there is no location change in the charging base itself, the mobile device erroneously determines that it has arrived at the location of the charging base due to influence of the accumulative errors, but actually it has not arrived at the actual location of the charging base. This may cause the "actual location" of the charging base (including the influence of the accumulative errors) "thought of" by the mobile device to be different from the stored candidate location, or not within the signal coverage zone, thereby causing recharging failure to the mobile device.

To resolve this technical problem in the conventional technology, the embodiments of the present invention provide a regional search for the candidate location of the charging base or the signal sensing location within the signal coverage zone.

According to an embodiment of the present invention, the effective receiving range of the recharging guidance signal of the charging base is set to be d (as shown by the radius d in FIG. 3f; the signal coverage zone in the embodiment shown in FIG. 3f is within a circular area having the charging base 10 as a center, and the effective receiving range d of the recharging guidance signal as the radius). The effective receiving range of the recharging guidance signal refers to the maximum distance at which the recharging guidance signal can be detected by the mobile device, such as the distance between the charging base 10 and the location B shown in FIG. 3d or FIG. 3e. If the mobile device needs to be charged, i.e., the mobile device is at the "recharging stage" (steps S210 to S240 as shown in FIG. 1a to FIG. 1c), mobile device to be charged moves (also referred to as navigates) to the stored candidate location (e.g., the location A shown in FIG. 3c) and/or the signal sensing location (e.g., the location B shown in FIG. 3e), and/or the corresponding nearby location thereof (collectively referred to as the target location. the target location includes: the candidate location, and/or the signal sensing location, and may also include the nearby location corresponding to the candidate location and/or the signal sensing location), i.e., navigate to be within the signal coverage zone (e.g., within a circular area of the circle having the charging base 10 as the center, and the effective receiving range d as the radius and passing through the location B, as shown in FIG. 3f).

In an embodiment of the present invention, the regional search in the "recharging stage" is performed after step S220. That is, when the mobile device moves to the candidate location (embodiment 1 or embodiment 3) and/or the signal sensing location (embodiment 2 or embodiment 3) and/or their nearby location or during the movement, the charging base is not discovered, and/or the recharging guidance signal is not detected, at this moment, the regional search of step S230 is executed (in the step S230, it is inevitable to have multiple executions overlapping with other steps or the same as the other steps in the various embodiments introduced above, a technical person in this field should understand that the regional search step is a node in the entire recharging method, and is not limited to the other steps in the various embodiments described above), as shown in FIG. Id, which includes:

Step S231: using the stored candidate location or signal sensing location as a center, determining the search zone by setting a boundary threshold.

The "search zone" of the present invention refers to a search zone of the regional search, unless otherwise noted. The search zone may be any closed shape, such as a circular shape, a square shape, a rectangular shape, a rhombus shape, an oval shape, a triangular shape, etc., or may be a combination of any of various shapes, or an irregular shape. For example, the search zone may be determined using a circular zone having the candidate location of point A shown in FIG. 3c or the signal sensing location of point B shown in FIG. 3d or FIG. 3e as a center, and the effective receiving range d of the recharging guidance signal as the radius, or using a square zone having an edge length of 2d, where the radius d and the edge length 2d are the boundary thresholds for the circular search zone and the square search zone, respectively. The boundary threshold may be pre-configured in the mobile device, or may be set by a user. For a circular search zone, the boundary threshold may be represented by the diameter or the radius of the circular shape. For a square search zone, the boundary threshold may be represented by the edge length or the diagonal length of the square. For an oval shaped search zone, the boundary thresholds may be represented by the long axis and the short axis of the oval shape. For a rectangular search zone, the boundary thresholds may be represented by the length and width, or the length or width and the diagonal length. For a search zone of the same shape, the boundary threshold may be represented in multiple forms, as long as the forms can deterministically and accurately represent the search zone. In the present embodiment, a square search zone is used as an example. The edge length of the square is set as the boundary threshold for representing the square search zone, referring to the square zone shown in FIG. 3f.

The above search zone of the present embodiment is also referred to as a basic search zone or a first search zone.

The boundary threshold may be smaller or greater than the effective receiving range d, d > 0_{>>} of the recharging guidance signal of the charging base. Preferably, the boundary threshold is a predetermined number of times of the effective receiving range d of the recharging guidance signal of the charging base, such as 1.5d, 2d, 4d, etc. A search zone currently established may be a circular search zone having a diameter of 1.5d, 2d, 4d, or a square search zone having an edge length or diagonal length of 1.5d, 2d, 4d, etc.

For different types or models of mobile devices, the effective receiving ranges of the corresponding charging bases may be different. If there are multiple compatible charging bases that can charge the same mobile device in the actual work zone, the boundary threshold may use the shortest effective receiving range of the multiple charging bases as the base value d. For example, the effective receiving ranges of three charging bases of the mobile device may be d1=1 meter, d2=2 meters, and d3=4 meters. Preferably the shortest effective receiving range d1 = 1 meter may be used as the boundary threshold. There can be other settings. A technical person in this field can appreciate that the setting of the boundary threshold is merely details about adjustment of parameters. The present invention is not limited by the value of the effective receiving range d of the recharging guidance signal and the setting of the boundary threshold in the above embodiments.

Step S232: the mobile device moves along the boundary of the search zone, and simultaneously searches for the recharging guidance signal and/or the charging base.

When the mobile device moves along the boundary of the basic search zone, if it discovers the charging base, it moves directly to the charging base to perform charging; if it detects the recharging guidance signal, it finds the charging base under the guidance of the recharging guidance signal to perform charging.

The mobile device moves to the target location, but did not discover the charging base and did not detect the recharging guidance signal, this may be caused by the positioning errors of the mobile device itself. For example, accumulative errors of the encoder wheel and/or the IMU of the mobile device cause the mobile device 80 to determine that it has moved to the signal sensing location B, as shown in FIG. 3f, but actually the mobile device 80 moved to the location C outside of the signal coverage zone due to the errors, and hence did not discover the recharging guidance signal at the location C. At this moment, the mobile device 80 moves along the boundary of a square search zone, which uses the location C as the center and has a predetermined edge length of 2d, while searching for the recharging guidance signal during movement. When the mobile device detects the recharging guidance signal before finishing moving along the boundary of the first search zone, for example, when arriving at the location D shown in FIG. 3f (the mobile device 80 moves along a moving direction 101 shown in FIG. 3f, thereby moving along the boundary of the search zone in counter-clockwise direction), or the location E (in a direction opposite to the moving direction 101 shown in FIG. 3f), it starts detecting the recharging guidance signal, at this moment, it finds the charging base 10 under the guidance of the recharging guidance signal, to perform charging successfully.

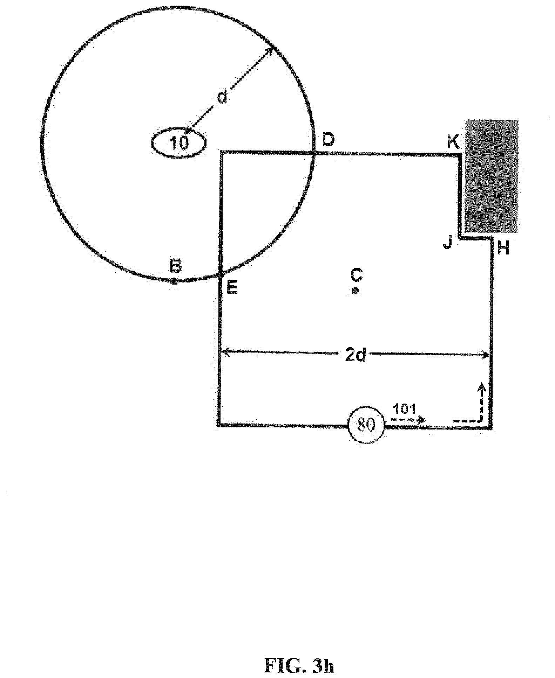

Preferably, when the mobile device moves along the boundary of any search zone while searching for the recharging guidance signal, the mobile device encounters an obstacle within an actual work zone, then it moves along the boundary of the obstacle in the search zone, as shown in FIG. 3h. When the mobile device moves to a location H shown in FIG. 3h, it encounters the obstacle in the actual work zone, the mobile device may move along the boundary of the obstacle in the search zone to a location J, and continue to move from the location J to a location K at the intersection of the obstacle and the search zone. At the location K, it continues moving along the boundary of the search zone in a direction toward the location D.

During the process of searching for the target while moving along the boundary of the basic search zone, as in step S232, if the target is not discovered when a predetermined first termination condition is satisfied (the first termination condition corresponds to the condition for the failure of searching for the target in the current basic search zone, including: a predetermined time has lapsed, or all of the boundary of the basic search zone has been searched), the mobile device may terminate the regional search for the basic search zone. As a simple embodiment, at this moment, the mobile device may directly execute step S250, to stop moving or move to a designated location, and/or generate an alarm or an error signal. Alternatively, within the predetermined time, or after all of the boundary of the first search zone has been searched, if the charging base has still not been discovered or the recharging guidance signal has still not been discovered, the mobile device may move, within the actual work zone, along the boundary, and search for the target, i.e., the recharging guidance signal and/or the charging base. If the target is still not discovered, then it may stop moving or may move to a designated location, and/or generate an alarm or an error signal.

As a more preferably embodiment, the number of searches for a zone may be set as n. The search zone determined in the above step S231 is the first search zone or the basic search zone, i.e., n=1. At this moment, the mobile device executes the above step S232: the mobile device 80 moves along the boundary of the first search zone, and in the meantime searches for the recharging guidance signal and/or the charging base.

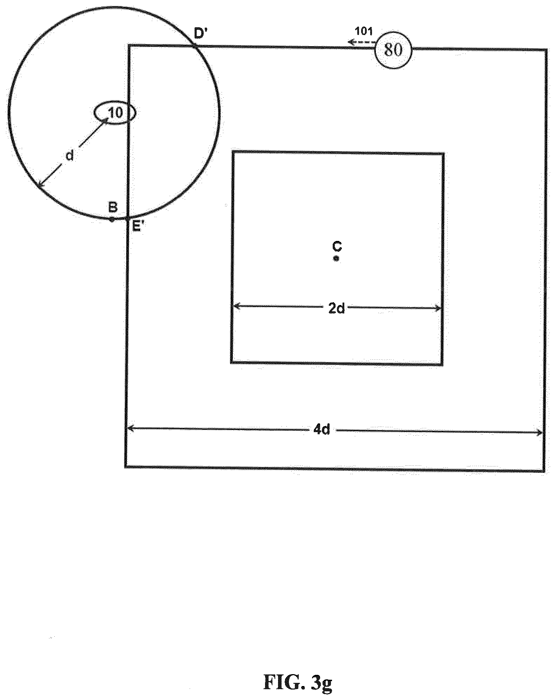

After the mobile device 80 has moved along the boundary of the first search zone (i.e., having travelled along the entire boundary of the first search zone) or after the predetermined time has lapsed, the recharging guidance signal or the charging base has still not been discovered, it indicates that the signal coverage zone of the charging base 10 does not overlap with the first search zone, as shown in FIG. 3g. At this moment, the mobile device 80 sets, based on the first search zone, a second search zone having a larger range and a larger perimeter (n=2). For example, as shown in FIG. 3g, the second search zone may be set using the location C as the center, and 4d as the boundary threshold, and step S232 is executed again, that is, the mobile device moves along the boundary of the second search zone and at the meantime searches for the recharging guidance signal and/or the charging base. When the mobile device moves to a location D' or E, the recharging guidance signal is detected. At this moment, the mobile device finds the charging base 10 under the guidance of the recharging guidance signal to perform charging successfully. If the mobile robot moves along the boundary of the second search zone, but still does not detect the recharging guidance signal and/or the charging base, then the value of n can be continuously increased, until the value of n equals to the preset N. The number of times N for searching for the recharging guidance signal may be pre-set, i.e., pre-set the number of search zones. As described above, the search zone established for the first time is the first search zone or the basic search zone. The search zone established for the second time is the second search zone, ..., and the search zone established for the N-th time is the N-th search zone.

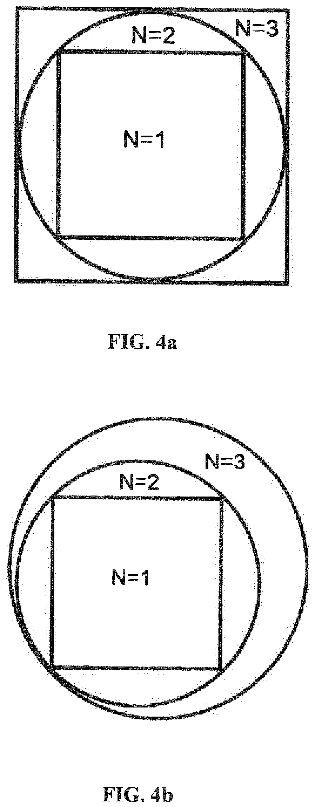

The perimeter of a latter search zone can be greater than the perimeter of a preceding search zone. But it should be noted that although in the above embodiments of the present invention, the shape of the latter search zone is the same as the shape of the first search zone, the shape of the latter search zone may be different from the shape of the first search zone, as shown in FIG. 4a, FIG. 4b. The center of the latter search zone may not coincide with the center of the first search zone, as shown in FIG. 4b. Within the range of the predetermined time or the pre-set number of times of searching of a search zone, if the mobile device discovers the charging base, the mobile device moves to the charging base; if the recharging guidance signal is discovered, the mobile device moves to the charging base under the guidance of the recharging guidance signal.

As a preferred embodiment, after the mobile device has completed the N times of searching (N may also be equal to 1), the target still has not been discovered, step S234 may also be executed: within the predetermined time or after travelling for the predetermined rounds (e.g., the pre-set N times of searching the zone), the charging base or the recharging guidance signal still has not been discovered, the mobile device can still move, within the actual work zone, along the boundary and search for the recharging guidance signal and/or the charging base.

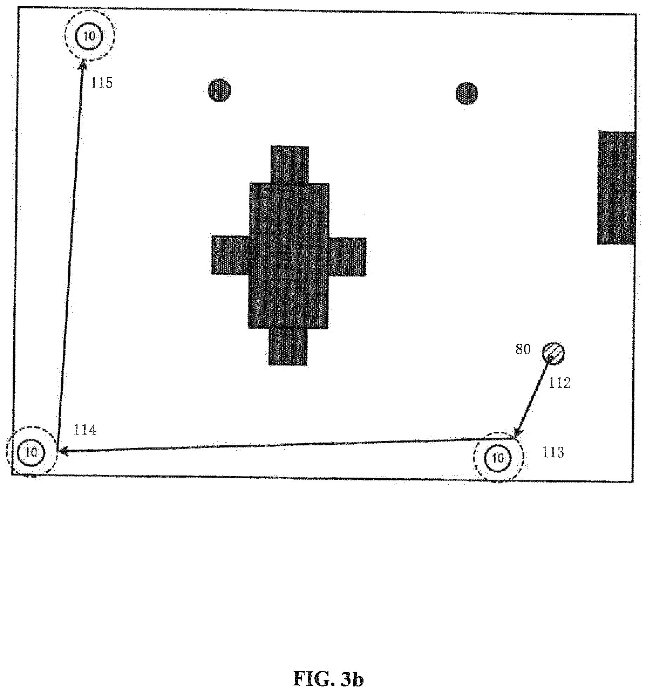

Because the mobile device typically moves in a limited space (e.g., an indoor space), and charging bases are typically placed near the wall of the limited space (because the plug of the charging base needs to be connected with the power outlet on the wall to receive electrical energy), when the mobile device moves along inner side of the wall following the boundary of the indoor space, the charging base can typically be discovered. As shown in FIG. 3a, after the mobile device 80 completes N times of searching, it is at a location 102, the mobile device moves in a certain direction until finding a boundary location 103 of an obstacle. The mobile device then moves along the boundary of the obstacle, until finding the charging base 10 actually located at a location 104 or the recharging guidance signal (the signal coverage zone of the recharging guidance signal is shown as the dashed circles surrounding the charging base 10 in FIG. 3a, FIG. 3b), thereby accomplishing charging.

Of course a searching time period can also be set. If the charging base is not discovered within the searching time period, the mobile device can generate an alarm or move to a designated location.

When the mobile device stores multiple candidate locations or multiple signal sensing locations, if a distance L between the candidate locations or the signal sensing locations is much larger than the effective receiving range d (e.g., L>2d), during the "recharging stage," the mobile device may sequentially navigate to each of the candidate locations or the signal sensing locations, or their nearby locations, to search for the recharging guidance signal. For example, as shown in FIG. 3b, at a location 112, the mobile device 80 detects that its electric power is lower than a low electric power threshold, which triggers the mobile device to enter the "recharging stage." Three stored candidate locations or signal sensing locations are retrieved, which are locations 113, 114, and 115 shown in FIG. 3b. In an embodiment, based on the distance between the current location 112 of the mobile device and each of the candidate locations or signal sensing locations or their respective nearby locations, the mobile device sequentially navigates to the nearby of the locations 113, 114, and 115 to search for the recharging guidance signal. As shown in FIG. 3b, the mobile device 100 may detect the recharging guidance signal at the location 115, thereby successfully discovering the charging base 10 to perform the charging. In some embodiments, the order of the navigation destinations (e.g., the above locations) may be determined based on the distribution of the obstacles in the actual work zone or based on other conditions (e.g., based on comparison of the confidence levels associated with the candidate locations or signal sensing locations, comparison of the densities of the candidate locations or signal sensing locations within a region or zone, or based on a totality or combination of the above factors).

In practice, after numerous experiments, it is discovered that when there are multiple candidate locations or signal sensing locations, the stronger the signal strength received by the mobile device at a specific location, the higher the confidence level associated with using this specific location as the candidate location or signal sensing location. Therefore, in embodiments where the order in which the navigation destinations are selected is based on the confidence level associated with each candidate location or signal sensing location, each of the candidate locations or signal sensing locations may be sorted based on the strengths of the recharging guidance signal received and stored by the mobile device at each of the candidate locations or signal sensing locations. The mobile device performs navigation and searching based on this sorting. For example, in FIG. 3b, if the strength of the recharging guidance signal stored at location 112, location 113, location 114, and location 115 are from an order of strong to weak, the navigation route of the mobile device may be: location 112 ->location 113 ->location 114 -> location 115. The mobile device performs the navigation and searching according to this navigation route.

Of course, to increase the recharging searching efficiency of the mobile device, in some embodiments, first the signal strengths of the recharging guidance signals stored at the multiple candidate locations or signal sensing locations may be compared. The order for the navigation destinations is selected based on the signal strengths of the stored recharging guidance signals. Furthermore, to shorten the searching time period, and increase the system response speed of the mobile device, only two candidate locations or signal sensing locations corresponding to two recharging guidance signals having the strongest signal strengths may be stored. If the charging base is not discovered at those two stored candidate locations or signal sensing locations corresponding to the two strongest recharging guidance signals, the regional search may be terminated. For example, assuming in FIG. 3b, the recharging guidance signals stored at the location 112 and the location 113 have the strongest strengths, after searching at the location 112, the mobile device move only to the location 113 to perform the searching. Even if the charging base is not discovered at the location 112 and the location 113, search is not performed at the other locations, such as the location 114 or the location 115.

It can be understood that in the technical solutions provided by the present embodiments, as compared with the conventional technology, multiple candidate locations or signal sensing locations are included. When the charging base or the recharging guidance signal is not discovered at one of the candidate locations or the signal sensing locations, a regional search is performed at this candidate location or signal sensing location. If the charging base or the recharging guidance signal is still not discovered, the regional search scope is enlarged. If the charging base or the recharging guidance signal is still not discovered, and in the situation in which multiple target locations are stored, the mobile device may be navigated to another candidate location or signal sensing location. If the charging base or the recharging guidance signal is still not discovered at the other candidate location, a regional search is again performed, until the charging base or the signal sensing location is discovered, or, until regional searches have been performed at all of the stored candidate locations and/or signal sensing locations, or a predetermined time period for performing the regional searches has lapsed, thereby realizing regional searches for the charging base in a focused, targeted, and orderly manner, such that even if there is a deviation between the actual location of the charging base and the candidate location or the signal sensing location, the mobile device may still find the charging base within a shortest time frame according to a predetermined process, thereby increasing the charging success rate.

In addition, an embodiment of the present invention also provides a mobile device according to claim 7.

It can be understood that in the technical solutions provided by the present embodiments, because a regional search for the charging base is introduced in the recharging process of the mobile device, even if there is a deviation or displacement in the location of the charging base, the mobile device can still automatically search and find the charging base at a high probability, thereby increasing the recharging success rate of the mobile device.

## Claims

1. A recharging method for a mobile device (80) **characterized by** comprising:
retrieving a stored target location , wherein the target location is a signal sensing location previously stored in a data storage device, and wherein the signal sensing location is a location where the mobile device previously detected a recharging guidance signal transmitted by a charging base, the mobile device being configured to move on a floor;
navigating the mobile device (80) to the target location;
if the recharging guidance signal is not discovered during the navigation and/or at the target location, controlling the mobile device (80) to perform a regional search to search for the recharging guidance signal within a signal coverage zone of the charging base (10);
if the recharging guidance signal is discovered during the navigation or at the target location or during the regional search, moving the mobile device to the charging base (10) to perform charging, wherein
performing the regional search comprises:
using the target location as a center, setting a boundary threshold to determine a basic search zone;
searching for the recharging guidance signal along a boundary of the basic search zone, if the recharging guidance signal is still not discovered when a predetermined first termination condition is satisfied, terminating the regional search in the basic search zone;
wherein, the first termination condition includes: a predetermined time has lapsed, or all the boundary of the basic search zone has been searched.

2. The method of claim 1, **characterized in that**, moving to the charging base (10) to perform charging comprises:
moving to the charging base (10) under the guidance of the recharging guidance signal to perform charging.

3. The method of claim 1, performing the regional search also comprises:
if the target is still not discovered when the predetermined first termination condition is satisfied, determining a second search zone based on a second boundary threshold; a perimeter of the second search zone is greater than a perimeter of the basic search zone; searching for the target along a boundary of the second search zone.

4. The method of any of claims 1-2, **characterized in that**, also comprising:
if the target is still not discovered after the regional search, moving along a boundary of an actual work zone of the mobile device (80), and searching for the target.

5. The method of claim 4, **characterized in that**, also comprising:
when searching for the target along the boundary of the actual work zone, if the target is not discovered during a predetermined search time, generating an alarm or moving to a designated location.

6. The method of any of claims 1-2, **characterized in that**, if there are multiple target locations, navigating to the target location comprises:
based on distances between each of the target locations and a current location of the mobile device, in an order of the distances from the closest to the farthest, navigating to each of the target locations; and/or
based on a distribution of obstacles within the actual work zone, navigating to each of the target locations; and/or
based on confidence levels of each of the target locations, in an order of the confidence levels from large to small, navigating to each of the target locations.

7. A mobile device (80) comprising:
a motion mechanism configured to enable the mobile device (80) to move on a floor;
a receiver configured to detect a recharging guidance signal;
a processor; and
a data storage device configured to store processor-executable instructions; **characterized in that** the processor is configured to:
retrieve a stored target location, wherein the target location is a signal sensing location previously stored in the data storage device, and wherein the signal sensing location is a location where the receiver previously detected the recharging guidance signal transmitted by the charging base;
navigate the mobile device (80) to be charged to the target location;
if the recharging guidance signal is not discovered during the navigation and/or at the target location, control the mobile device (80) to perform a regional search to search for the recharging guidance signal within a signal coverage zone of the charging base (10);
if the recharging guidance signal is discovered during the navigation or at the target location or during the regional search, control the mobile device (80) to move to the charging base (10) to perform charging;
wherein performing the regional search comprises:
using the target location as a center, setting a boundary threshold to determine a basic search zone;
searching for the recharging guidance signal along a boundary of the basic search zone, if the recharging guidance signal is still not discovered when a predetermined first termination condition is satisfied, terminating the regional search in the basic search zone;
wherein, the first termination condition includes: a predetermined time has lapsed, or all the boundary of the basic search zone has been searched.

8. The mobile device (80) of claim 7, **characterized in that**, the mobile device (80) is a cleaning robot.

## Patentansprüche

1. Aufladeverfahren für eine mobile Vorrichtung (80), **dadurch gekennzeichnet, dass** es Folgendes umfasst:
Abrufen eines gespeicherten Zielortes, wobei der Zielort ein Signalerfassungsort ist, der zuvor in einer Datenspeichervorrichtung gespeichert wurde, und wobei der Signalerfassungsort ein Ort ist, an dem die mobile Vorrichtung zuvor ein Aufladeführungssignal detektiert hat, das durch eine Ladebasis übertragen wird, wobei die mobile Vorrichtung dazu ausgelegt ist, sich auf einem Boden zu bewegen;
Navigieren der mobilen Vorrichtung (80) zum Zielort;
wenn das Aufladeführungssignal während der Navigation und/oder am Zielort nicht entdeckt wird, Steuern der mobilen Vorrichtung (80) zum Durchführen einer regionalen Suche, um innerhalb einer Signalabdeckungszone der Ladebasis (10) nach dem Aufladeführungssignal zu suchen;
wenn das Aufladeführungssignal während der Navigation oder am Zielort oder während der regionalen Suche entdeckt wird, Bewegen der mobilen Vorrichtung zur Ladebasis (10), um ein Laden durchzuführen,
wobei das Durchführen der regionalen Suche Folgendes umfasst:
Einstellen eines Begrenzungsschwellwerts unter Verwendung des Zielortes als eine Mitte, um eine Basisssuchzone zu bestimmen;
Suchen nach dem Aufladeführungssignal entlang einer Begrenzung der Basisssuchzone, wenn das Aufladeführungssignal noch immer nicht entdeckt ist, wenn eine erste vorbestimmte Abschlussbedingung erfüllt ist, Abschließen der regionalen Suche in der Basisssuchzone;
wobei die erste Abschlussbedingung Folgendes beinhaltet: eine vorbestimmte Zeit ist abgelaufen oder die gesamte Begrenzung der Basisssuchzone wurde abgesucht.

2. Verfahren nach Anspruch 1, **dadurch gekennzeichnet, dass** das Bewegen zur Ladebasis (10), um ein Laden durchzuführen, Folgendes umfasst:
Bewegen zur Ladebasis (10) unter der Führung des Aufladeführungssignals, um ein Laden durchzuführen.

3. Verfahren nach Anspruch 1, wobei das Durchführen der regionalen Suche außerdem Folgendes umfasst:
wenn das Ziel noch immer nicht entdeckt ist, wenn die vorbestimmte erste Abschlussbedingung erfüllt ist, Bestimmen einer zweiten Suchzone auf Basis eines zweiten Begrenzungsschwellwerts; ein Umfang der zweiten Suchzone ist größer als ein Umfang der Basisssuchzone; Suchen nach dem Ziel entlang einer Begrenzung der zweiten Suchzone.

4. Verfahren nach einem der Ansprüche 1 bis 2, **dadurch gekennzeichnet, dass** es außerdem Folgendes umfasst:
wenn das Ziel nach der regionalen Suche noch immer nicht entdeckt ist, Bewegen entlang einer Begrenzung einer tatsächlichen Arbeitszone der mobilen Vorrichtung (80) und Suchen nach dem Ziel.

5. Verfahren nach Anspruch 4, **dadurch gekennzeichnet, dass** es außerdem Folgendes umfasst:
wenn nach dem Ziel entlang der Begrenzung der tatsächlichen Arbeitszone gesucht wird und das Ziel während einer vorbestimmten Suchzeit nicht entdeckt wird, Erzeugen eines Alarms oder Bewegen zu einem angegebenen Ort.

6. Verfahren nach einem der Ansprüche 1 bis 2, **dadurch gekennzeichnet, dass**, wenn es mehrere Zielorte gibt, das Navigieren zum Zielort Folgendes umfasst:
Navigieren zu jedem der Zielorte auf Basis von Abständen zwischen jedem der Zielorte und einem aktuellen Ort der mobilen Vorrichtung in einer Reihenfolge der Abstände vom nächsten zum weitesten; und/oder
Navigieren zu jedem der Zielorte auf Basis einer Verteilung von Hindernissen in der tatsächlichen Arbeitszone; und/oder
Navigieren zu jedem der Zielorte auf Basis von Vertrauensniveaus von jedem der Zielorte in einer Reihenfolge der Vertrauensniveaus von groß zu klein.

7. Mobile Vorrichtung (80), die Folgendes umfasst:
einen Bewegungsmechanismus, der dazu ausgelegt ist, es der mobilen Vorrichtung (80) zu ermöglichen, sich auf einem Boden zu bewegen;
einen Empfänger, der dazu ausgelegt ist, ein Aufladeführungssignal zu detektieren;
einen Prozessor; und
eine Datenspeichervorrichtung, die dazu ausgelegt ist, prozessorausführbare Anweisungen zu speichern;
**dadurch gekennzeichnet, dass** der Prozessor zu Folgendem ausgelegt ist:
Abrufen eines gespeicherten Zielortes, wobei der Zielort ein Signalerfassungsort ist, der zuvor in der Datenspeichervorrichtung gespeichert wurde, und wobei der Signalerfassungsort ein Ort ist, an dem der Empfänger zuvor das Aufladeführungssignal detektiert hat, das durch die Ladebasis übertragen wird;
Navigieren der zu ladenden mobilen Vorrichtung (80) zum Zielort;
wenn das Aufladeführungssignal während der Navigation und/oder am Zielort nicht entdeckt wird, Steuern der mobilen Vorrichtung (80) zum Durchführen einer regionalen Suche, um innerhalb einer Signalabdeckungszone der Ladebasis (10) nach dem Aufladeführungssignal zu suchen;
wenn das Aufladeführungssignal während der Navigation oder am Zielort oder während der regionalen Suche entdeckt wird, Steuern der mobilen Vorrichtung (80) zum Bewegen zur Ladebasis (10), um ein Laden durchzuführen;
wobei das Durchführen der regionalen Suche Folgendes umfasst:
Einstellen eines Begrenzungsschwellwerts unter Verwendung des Zielortes als eine Mitte, um eine Basisssuchzone zu bestimmen;
Suchen nach dem Aufladeführungssignal entlang einer Begrenzung der Basisssuchzone, wenn das Aufladeführungssignal noch immer nicht entdeckt ist, wenn eine erste vorbestimmte Abschlussbedingung erfüllt ist, Abschließen der regionalen Suche in der Basisssuchzone;
wobei die erste Abschlussbedingung Folgendes beinhaltet: eine vorbestimmte Zeit ist abgelaufen oder die gesamte Begrenzung der Basisssuchzone wurde abgesucht.

8. Mobile Vorrichtung (80) nach Anspruch 7, **dadurch gekennzeichnet, dass** die mobile Vorrichtung (80) eine Reinigungsroboter ist.

## Revendications

1. Procédé de recharge pour un dispositif mobile (80) **caractérisé en ce qu'**il comprend :
la récupération d'un emplacement cible stocké, dans lequel l'emplacement cible est un emplacement de détection de signal précédemment stocké dans un dispositif de stockage de données, et dans lequel l'emplacement de détection de signal est un emplacement où le dispositif mobile a précédemment détecté un signal de guidage de recharge transmis par une base de charge, le dispositif mobile étant configuré pour se déplacer sur un sol ;
la navigation du dispositif mobile (80) vers l'emplacement cible ;
si le signal de guidage de recharge n'est pas découvert pendant la navigation et/ou à l'emplacement cible, la commande du dispositif mobile (80) pour qu'il effectue une recherche régionale pour chercher le signal de guidage de recharge dans une zone de couverture de signal de la base de charge (10) ;
si le signal de guidage de recharge est découvert pendant la navigation, à l'emplacement cible ou au cours de la recherche régionale, le déplacement du dispositif mobile jusqu'à la base de charge (10) pour réaliser la charge,
dans lequel la réalisation de la recherche régionale comprend :
en utilisant l'emplacement cible comme centre, la définition d'un seuil limite pour déterminer une zone de recherche de base ;
la recherche du signal de guidage de recharge tout au long de la limite de la zone de recherche de base, si le signal de guidage de recharge n'est toujours pas découvert lorsqu'une première condition d'arrêt prédéterminée est satisfaite, l'arrêt de la recherche régionale dans la zone de recherche de base ;
dans lequel la première condition d'arrêt comporte ce qui suit : un temps prédéterminé s'est écoulé, ou la recherche de la totalité de la limite de la zone de recherche de base a été effectuée.

2. Procédé selon la revendication 1, **caractérisé en ce que** le déplacement jusqu'à la base de charge (10) pour réaliser la charge comprend :
le déplacement jusqu'à la base de charge (10) en se laissant guider par le signal de guidage de recharge pour réaliser la charge.

3. Procédé selon la revendication 1, où la réalisation de la recherche régionale comprend également :
si la cible n'est toujours pas découverte lorsque la première condition d'arrêt prédéterminée est satisfaite, la détermination d'une deuxième zone de recherche sur la base d'un deuxième seuil limite ; le périmètre de la deuxième zone de recherche étant supérieur au périmètre de la zone de recherche de base ; la recherche de la cible tout au long de la limite de la deuxième zone de recherche.

4. Procédé selon l'une des revendications 1 et 2, **caractérisé en ce qu'**il comprend également :
si la cible n'est toujours pas découverte après la recherche régionale, le déplacement tout au long de la limite d'une zone de travail réelle du dispositif mobile (80), et la recherche de la cible.

5. Procédé selon la revendication 4, **caractérisé en ce qu'**il comprend également :
lors de la recherche de la cible tout au long de la limite de la zone de travail réelle, si la cible n'est pas découverte pendant un temps de recherche prédéterminé, la génération d'une alarme ou le déplacement jusqu'à un emplacement désigné.

6. Procédé selon l'une des revendications 1 et 2, **caractérisé en ce que** dans le cas de multiples emplacements cibles, la navigation vers l'emplacement cible comprend :
la navigation vers chacun des emplacements cibles sur la base de distances entre chacun des emplacements cibles et un emplacement actuel du dispositif mobile dans l'ordre des distances de la plus proche à la plus éloignée ; et/ou
la navigation vers chacun des emplacements cibles sur la base d'une répartition d'obstacles dans la zone de travail réelle ; et/ou
la navigation vers chacun des emplacements cibles sur la base de niveaux de confiance de chacun des emplacements cibles dans l'ordre des niveaux de confiance allant de grand à petit.

7. Dispositif mobile (80) comprenant :
un mécanisme de mouvement configuré pour permettre au dispositif mobile (80) de se déplacer sur un sol ;
un récepteur configuré pour détecter un signal de guidage de recharge ;
un processeur ; et
un dispositif de stockage de données configuré pour stocker des instructions exécutables par un processeur ;
**caractérisé en ce que** le processeur est configuré pour :
récupérer un emplacement cible stocké, dans lequel l'emplacement cible est un emplacement de détection de signal précédemment stocké dans un dispositif de stockage de données, et dans lequel l'emplacement de détection de signal est un emplacement où le récepteur a précédemment détecté le signal de guidage de recharge transmis par la base de charge ;
faire naviguer le dispositif mobile (80) à charger vers l'emplacement cible ;
si le signal de guidage de recharge n'est pas découvert pendant la navigation et/ou à l'emplacement cible, commander le dispositif mobile (80) pour qu'il effectue une recherche régionale pour chercher le signal de guidage de recharge dans une zone de couverture de signal de la base de charge (10) ;
si le signal de guidage de recharge est découvert pendant la navigation, à l'emplacement cible ou au cours de la recherche régionale, commander le dispositif mobile (80) pour qu'il se déplace jusqu'à la base de charge (10) pour réaliser la charge ;
dans lequel la réalisation de la recherche régionale comprend :
en utilisant l'emplacement cible comme centre, la définition d'un seuil limite pour déterminer une zone de recherche de base ;
la recherche du signal de guidage de recharge tout au long de la limite de la zone de recherche de base, si le signal de guidage de recharge n'est toujours pas découvert lorsqu'une première condition d'arrêt prédéterminée est satisfaite, l'arrêt de la recherche régionale dans la zone de recherche de base ;
dans lequel la première condition d'arrêt comporte ce qui suit : un temps prédéterminé s'est écoulé, ou la recherche de la totalité de la limite de la zone de recherche de base a été effectuée.

8. Dispositif mobile (80) selon la revendication 7, **caractérisé en ce que** le dispositif mobile (80) est un robot de nettoyage.
